# EUROPEAN PATENT SPECIFICATION

(11) **EP 3 397 070 B1**
(45) Date of publication and mention of the grant of the patent: **25.11.2020**
(21) Application number: 16826620.3
(22) Date of filing: 27.12.2016
(51) Int. Cl.: A23K 50/42, A23K 10/30, A23K 40/00, A01K 15/02

(54) **VEGETABLE AND FRUIT KABOB PET TREAT**
TIERLECKEREI IN FORM EINES GEMÜSE- UND OBSTKEBAPS
FRIANDISE POUR ANIMAL DOMESTIQUE DE TYPE BROCHETTE AUX FRUITS ET AUX LÉGUMES

(30) Priority: 28.12.2015 US 201562271854 P
(43) Date of publication of application: 07.11.2018
(60) Divisional application: 20185913.9
(73) Proprietor: Spectrum Brands, Inc., Middleton, WI 53562 (US)
(72) Inventor: HARBOUR, Stacey, Dardenne Prairie MO 63368 (US); SIMS, Casey, Saint Louis MO 63118 (US); CARLEY, Joseph, Christopher, Blacksburg VA 24060 (US)
(74) Representative: Zimmermann & Partner Patentanwälte mbB
(86) International application number: PCT/US2016/068728
(87) International publication number: WO 2017/117140

(56) References cited:
- WO-A2-2004/062522
- CN-Y- 2 755 968
- US-A1- 2004 126 462
- US-A1- 2005 147 719
- US-A1- 2009 235 872
- US-A1- 2013 266 696
- US-A1- 2015 181 839
- US-B2- 9 044 039
- Felissa Elfenbein: "Cooking for Dogs - Shish Kebabs", twolittlecavaliers.com , 10 June 2012 (2012-06-10), pages 1-3, XP002767376, Retrieved from the Internet: URL:http://twolittlecavaliers.com/2012/06/ cooking-for-dogs-shish-kebabs.html [retrieved on 2017-02-17]
- Anonymous: "Griddled glazed vegetable kebabs", BBC Good Food , July 2010 (2010-07), pages 1-3, XP002767377, Retrieved from the Internet: URL:http://www.bbcgoodfood.com/recipes/588 651/griddled-glazed-vegetable-kebabs [retrieved on 2017-02-15]
- DATABASE WPI Week 200932 Thomson Scientific, London, GB; AN 2009-G80121 XP002767378, -& CN 201 207 894 Y (ZHANG S) 18 March 2009 (2009-03-18)

## Description

### Background

One of the main attributes of chew type products is a toughness and flexibility to the point where it takes the dog a long time to consume the product. A great majority of the chew style products include rawhide. While rawhide is used as a base material, it has limited acceptability because it does not maintain a dog's interest. Manufacturers have attempted to solve this problem of reduced acceptability by incorporating numerous ingredients and processing techniques into the manufacture of rawhide-based chews for dogs, such as incorporating meat in the middle of a rawhide stick.

Despite this, the basic problem remains. As ingredients or processing techniques are utilized with rawhide to increase palatability, they typically weaken the basic structure of the rawhide and produce a less acceptable product from the standpoint of extended chew time. Further, the rawhide stick does not provide a visually appealing treat for dog. The pet treat also does not give the pet owner a visually acceptable reaction when purchasing the pet treat. What is needed is a pet treat that provides a visually appealing product that stimulates a human to purchase the pet treat. What is needed is a pet treat that provides a palatable product for a pet and can provide an initial taste reward, but also gives the dog a chew portion for sustained pet treat duration.

The prior art demonstrates a long history of utilizing rawhide in dog chews, Fisher (U.S. Pat. No. 2,988,045) demonstrated the basic techniques of how rawhide can be separated at the tannery and split into layers that can be formed into shapes followed by dehydration to produce a shelf-stable rawhide chew for dogs. A wide range of patents for rawhide chew style products followed, teaching various forms, shapes and methods for utilizing a basic rawhide fraction as a dog chew. This included Lehn (U.S. Pat. No. 4,702,929) which teaches a method for extruding rawhide byproduct fraction, called spetches, with starch to form a dog chew in stick form. Spanier (U.S. Pat. No. 5,047,231) teaches a method of soaking an inorganic pyrophosphate salt into rawhide to form a chew capable of reducing tartar accumulation on the dog's teeth. Perlberg (U.S. Pat. No. 6,223,693) demonstrates a method of soaking rawhide in a humectant and soft edible binder to produce a flexible edible chew. Twain (U.S. Pat. No. 6,425,348) taught a method for producing a chewable pet shelter from rawhide which incorporated chemical flavoring which would appeal to the pet.

Kirch (U.S. Pat. No. 6,840,196) demonstrates a pet chew produced by folding a first sheet of rawhide around a second sheet of rawhide. The second sheet is impregnated with a flavoring and protrudes from under the first sheet of rawhide. This system served to increase the palatability of the chew while at the same time reduced the incident of rug staining which can be a problem when the flavoring is present on the surface of the product.

Hingst (U.S. Pat. No. 6,895,900) disclosed a combination rawhide and pigskin product where sheets of rawhide and pigskin are sandwiched or intertwined together to form a treat with improved flavor. Jia (U.S. Pat. No. 6,935,275) teaches a method for producing a dog treat by rolling a precut and flavored rawhide piece into a cylinder with strips of hide extending from the outer ends of the cylinder.

Hague (U.S. Pat. No. 6,886,497) disclosed a product and method for infusing a rawhide or pigskin with a mint, or chlorophyll, flavoring and applying perforations to the hide so that a dog's teeth would penetrate into the product to assist in the cleaning of the dog's teeth.

Some of the most commercially successful products utilizing rawhide as dog treats have taken the approach of incorporating a meat fraction in conjunction with the rawhide to significantly increase the palatability of the chew. Sherrill (U.S. Pat. No. 5,673,653) disclosed a product and process of wrapping jerky sheets on the inside of a roll of rawhide. The jerky fraction protruded from the ends and the horizontal seam of the outside layer so that the dog could quickly be subjected to the flavor of the dehydrated meat fraction. This product is commercially known as a "Dingo" treat. Only a small portion of meat fraction however is initially available to the dog and the manufacturing method of rolling rawhide within sheets of jerky significantly reduce the quantity of meat that can be incorporated on a dry weight basis.

Andersen (U.S. Pat. No. 6,277,420) demonstrates a method of making a preformed rawhide tube and depositing a shelf-stable liquid meaty filling into the cavity of the tube which gels and then forms a solid matrix on the inside of the rawhide. While this system incorporates large ratios of meaty filling fraction to rawhide, the chew time is somewhat reduced by the high moisture present in the system.

Brown (U.S. Pat. No. 6,886,496) has attempted to solve this problem by producing a pre-extruded dried meaty log that could be placed inside of a rolled rawhide cylinder. While this would result in a somewhat extended chew time over many of the earlier treats, a limited fraction of meat is available on the surface of the final chew to maintain a dog's interest for an extended period of time. Further, the initial meat reward may not be sufficient to entice the dog to finish the treat leaving a remnant of the treat behind. Document US2004/0126462 A1 relates to pet chews with filled receptacles and a method of making the same.

Yet there is nothing in the prior art that provides a dry outer portion that is substantially free or free from meat products for initial flavor enhancement. Further there is nothing in the prior art that provide a dry outer portion that is substantially free, or free from meat products with a rawhide chew for a subsequent pet chew that is appealing to a pet. The pet treat being sized to provide an intermediary pet treat that is more substantial than a "reward treat," (i.e. dog biscuit) but will take less time to consume when compared to a classic rawhide bone.

### Summary of the Invention

A composition and process for making pet food treats is described herein. The process comprises forming a plant mixture into portions, wherein the total plant material content is 6% to 90% by weight of the entire plant mixture. The portions of plant mixture are positioned on a chew stick that comprises rawhide, to form a pet treat that is then dried. The positioning step comprises wrapping the one or more portions around the chew stick that has been dried for at least 4 hours prior to having the one or more portions attached thereto. The pet treat comprises: at least one rawhide section shaped to form a chew stick and one or more portions, wherein the one or more portions are disposed on the outside surface of the chew stick,wherein the one or more portions comprises a plant mixture which comprises a plant base with one or more auxiliary ingredients, wherein the one or more portions are wrapped around the chew stick, and wherein the total plant material content is 6% to 90% by weight of the entire plant mixture.

The pet treat gives the appearance of a grilled shish kabob, where the plant portions are meant for initial taste and the chew stick will provide the dog with a longer-lasting chewing portion. The invention is defined by the appended set of claims. Aspects, embodiments and examples of the present disclosure which do not fall under the scope of the claims do not form part of the invention and are merely provided for illustrative purposes.

### Brief Description of the Drawings

FIG. 1 illustrates one embodiment of a process of making a plant mixture.
FIG. 2 illustrates one embodiment of a process of making a chew stick.
FIG. 3 illustrates one embodiment of a process of making a pet chew.
FIG. 4 illustrates one embodiment of a process of drying a pet treat.
FIG. 5 illustrates one embodiment of a process of inspecting a pet treat prior to shipment.
FIG. 6 illustrates one embodiment of a pet treat manufacturing process.
FIG. 7 is a perspective view of a pet treat
FIG. 8 is an end elevation view of a pet treat.
FIG. 9 is a side elevation view of a pet treat.

### Detailed Description

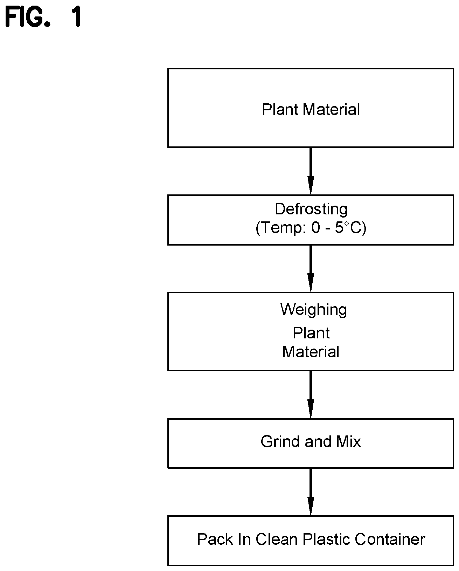

The method of making a pet treat is described herein. FIGs. 1-6 illustrate schematic depictions of particular aspects of the methods of making a pet treat. The method comprises forming a plant mixture into portions and positioning one or more portions on a chew stick, and drying the pet treat. As shown in FIG. 1, the plant base is made from a plant base material, such as a fruit, vegetable, vegetable protein, fruit extract, vegetable extract and combinations thereof that can be consumed by a domestic pet. The plant material may be fresh, dehydrated, powdered, an extract or frozen. In embodiments where the plant material is frozen the plant material is defrosted at about 0 degrees Celsius to about 5 degrees Celsius. Once the plant material is defrosted, the plant material is weighed. Once the predetermined amount of plant material is weighed, the plant material is placed in a grinder, the plant material(s) is ground and mixed with the specific desired ratio of plant material (s) and stored in a container as a plant base. It should be noted that the plant base may be frozen for later use, or may be used immediately after the plant base is prepared.

In one example embodiment, the plant base does not include any meat product, such as beef, pork, lamb, goat, horse, buffalo, venison, elk, moose, bone-in chicken, turkey, fish, or any other seafood. The term "meat" as described herein is intended to encompass portions of animals, mammal and non-mammal, that can be used for a pet treat. This includes but is not limited to soft tissue, internal organs, cartilage and bone.

A plant base material, as used herein, means a fruit, vegetable, vegetable protein, fruit extract, and/or vegetable extract that can be consumed by a domestic pet, such as a dog. The plant based material may be produced in various sizes or shapes. In particular, following mixture, the textured vegetable protein may be cut or shaped to look like meat portions on a shish kabob.

In one embodiment of the invention, the plant base may include fruits such as, apple, apricot, banana, blackberry, blackcurrant, blueberry, coconut, cherry, cherimoya, date, durian, fig, feijoa, gooseberry, grape, grapefruit, jackfruit, jambul, kiwifruit, kumquat, lemon, lime, loquat, lychee, mango, mangosteen, melon, cantaloupe, honeydew, watermelon, nectarine, orange, passionfruit, peach, pear, plum, prune, pineapple, pomegranate, pommelo, raspberry, rambutan, redcurrant, satsuma, strawberry, tangerine, ugli fruit and combinations thereof.

The plant base may include vegetables such as, artichoke, asparagus, avocado, bamboo shoots, bean sprouts, beans, beet, endive, bell pepper, broccoli, brussels sprouts, cabbage, calabaza, carrot, cauliflower, celery, cucumber, radish, eggplant, garlic, fiddlehead, galangal, ginger, beet greens, collard greens, dandelion greens, kale, mustard, spinach, Swiss chard, turnip greens, Jerusalem artichoke, jícama, lettuce, mushrooms, okra, , onion, parsley, parsnip, peas, peppers, plantain, pumpkin, radicchio, radish, rutabaga, spinach, squash, sweet potato, tomato, turnip, water chestnut, yams, and combinations thereof.

Pet treat may also include a starch composition which comprises any carbohydrate of natural or vegetable origin. The starch may include amylose and/or amylopectin and may be extracted from plants, including but not limited to potatoes, rice, tapioca, corn and cereals such as rye, wheat, and oats. The starch may also be extracted from fruits, nuts and rhizomes, or arrowroot, guar gum, locust bean, arracacha, buckwheat, banana, barley, cassava, konjac, kudzu, oca, sago, sorghum, sweet potato, taro, yams, fava beans, lentils and peas. The starch may be present between about 6-80% including but not limited to 10%, 15%, 20%, 25%, 30%, 35%, 40%, 45%, 50%, 55%, 60%, 65%, 70%, 75% and 80%. Alternatively, the starch composition may be at least 10%, 15%, 20%, 25%, 30%, 35%, 40%, 45%, 50%, 55%, 60%, 65%, 70%, 75% or 80%.

In some embodiments, starch is used to provide structural support to the plant mixture. The starch employed herein may be raw starch, which may be understood as starch that has not seen a prior thermal molding history, such as extrusion or other type of melt processing step. The raw starch itself may also be native, which may be understood as unmodified starch recovered in the original form by extraction and not physically or chemically modified. The raw starch may also be in powder form of varying particle size, which may be understood as milled and/or pre-sifted. It should be understood that the raw starch may also have varying degrees moisture present. The starch composition may include cellulose. The cellulose may be, for example, a long-chain polymer of polysaccharide carbohydrate. The cellulose may also be derived or extracted from plants. The cellulose may be incorporated into the starch composition between about 1-10% by weight of the starch composition.

Additionally, herbs, herbal extracts, vitamins, minerals, yeast products, soy products, may be incorporated into the plant base. Further, the plant base may also include food sources that provide phytochemicals. A non-exclusive list phytochemicals include: carotenoids, lycopenes, beta cryptozanthin, flavonoids, indoles, sulforaphane, isoflavones, allicin, genistein, polyphenols, anthocyanins, limonoids, sterols, capsaicin, elegiac acid and lignans.

In one example embodiment carotenoids are included in the plant base. In at least this example embodiment the carotenoids are included from a plant selected from a group consisting of carrots, cantaloupe, papaya, pumpkin, squash, sweet potatoes, broccoli, dried apricots, asparagus, kale, green leafy vegetables and combinations thereof. In related embodiments lycopenes are included in the plant base. The lycopenes are added with the addition of plants selected from a group consisting of tomatoes, tomato paste, tomato juice, guava, pink grapefruit, watermelon and combinations thereof. In other related embodiments, beta cryptozanthin are included in the plant base. Beta cryptozanthin are found in plants such as tangerines, papaya, oranges, peaches, mangoes, nectarines and combinations thereof.

In other example embodiments flavonoids extracted from plants such as soy, green tea, tomatoes, sweet potatoes, cruciferous vegetables such as broccoli, cabbage, brussels sprouts, mustard greens, kale, and cauliflower, citrus fruits, onions and combinations thereof can be used in the plant base. In other example embodiments, indoles and sulforaphane, which are commonly found in cruciferous vegetables are added to plant base. Examples of cruciferous vegetables include, but are not limited to cauliflower, cabbage, garden cress, bok choy, broccoli and brussels sprouts. In other related embodiments, isoflavones are included in plant base. Isoflavones are commonly found in legumes, such as beans, peas and lentils and soy products. In other related embodiments, allicin is added to the plant base, which can be found in plants such as onions and garlic. In example embodiments genistein is added through the addition of soy products, such as tofu. In other example embodiments, polyphenols can be added through the addition of green tea.

In yet other related embodiments, anthocyanins found in plants such as wild blueberries, bilberries and black berries can be included in plant base. Limonoids, found in citrus fruits such as clementine, grapefruit, kumquat, lemon, lime, mandarin, orange, tangerine and the like can also be added to plant base. In other embodiments, sterols from cruciferous vegetables, cucumbers, squash, sweet potatoes, soy foods, eggplant, whole grains, tomatoes and the like are included in plant base. In embodiments where the addition of capsaicin is desired, the phytochemical can be added by including chili peppers. Similarly, in embodiments where elegiac acid is desired strawberries can be included in plant base. The addition of lignans, can be achieved by the addition of nuts and seeds. It should be appreciated that the addition of certain plants will include more than one phytochemical listed herein. Further, extract(s) of the aforementioned plants can be added to specifically add a desired phytochemical or combination of phytochemicals to the plant base.

Other sources of important nutrients for animals may also include seaweed, kelp, blue green algae, spirulina, Irish moss, dulse, nori, kombu, wakeme, alfalfa, fenugreel seed, wheatgrass, barleygrass and marine phytoplankton.

The plant material is used in an amount of about 6% to 90% of the plant mixture. In one example embodiment, the plant material is used in an amount of about 6-35% by weight of the plant mixture. It should be appreciated that the other plant sources, including various extracts, can be used to provide a final taste or consistency for the plant mixture. In embodiments where other plant sources are used, the total plant content is 6% to 90% by weight of the entire plant mixture. Further, one should appreciated that although FIG. 1 notes plant material for use in forming the plant base it may optionally comprise beef, pork, lamb, goat, horse, buffalo, venison, elk, moose, chicken, turkey, fish, or any other seafood, or any combination of two or more thereof.

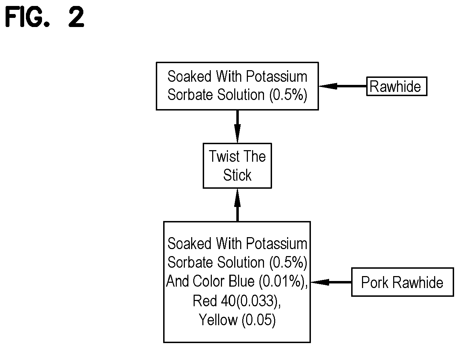

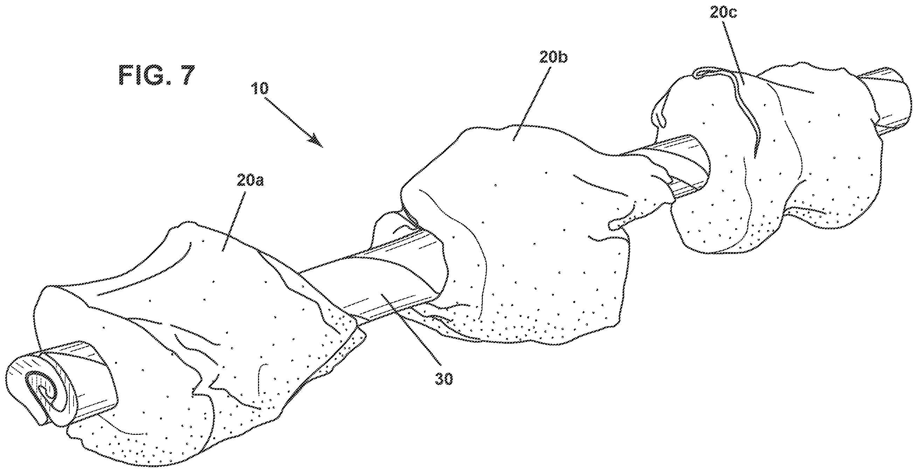

The process of forming a chew stick includes, but is not limited to the use of rawhide, or other similar materials to form an elongated section. It should be appreciated that the chew stick, as described herein may be made from several processes available to one skilled in the art; for example, extrusion, molding and the like are within the scope of the invention. In one example embodiment, the chew stick is prepared by shaping a piece of rawhide to form an elongated chew. As shown in FIG. 2, chew stick (illustrated in FIG. 7) is manufactured by taking a rawhide sheet and twisting the sheet to form an elongated stick-shape chew. As described in FIG. 2, a first rawhide sheet is cut to an appropriate size and a second sheet of rawhide is also cut in the shape of a similarly sized proportion. As shown, the first sheet and second sheet may be rawhide from different animals. In at least this example embodiment, the second sheet is a pork rawhide. Each rawhide sheet is soaked in a potassium sorbate solution. As shown, the potassium sorbate solution is (0.5%). Moreover, the second sheet has color agents added to enhance the overall appearance of the sheet. In this manner, the second sheet will provide a darker meat-like color to provide an additional visual enhancement for the overall pet treat. Still referring to FIG. 2, second rawhide sheet is colored with Color Blue, Red 40 and Yellow. It is important to note that the concentrations listed are representative of concentrations that can be utilized. However one of ordinary skill in the art would readily appreciate that the physical characteristics and animal origin of the rawhide may require modifications in the combinations and concentrations of each coloring agents to achieve a desired chew stick appearance. The sheets of rawhide may also be flavored according to one of the processes described herein.

The second sheet is placed upon the first sheet in the same general orientation, the two rawhide sheets are twisted together, as described, to make a multi-component chew stick. Once the rawhide sheets are twisted together, they are dried. In one example embodiment the chew stick is dried in an oven at 40 degrees Celsius to 65 degrees Celsius for 4 to 5 hours. Upon removing the dried chew stick from the oven, the sticks are allowed to cool to allow for ease in handling.

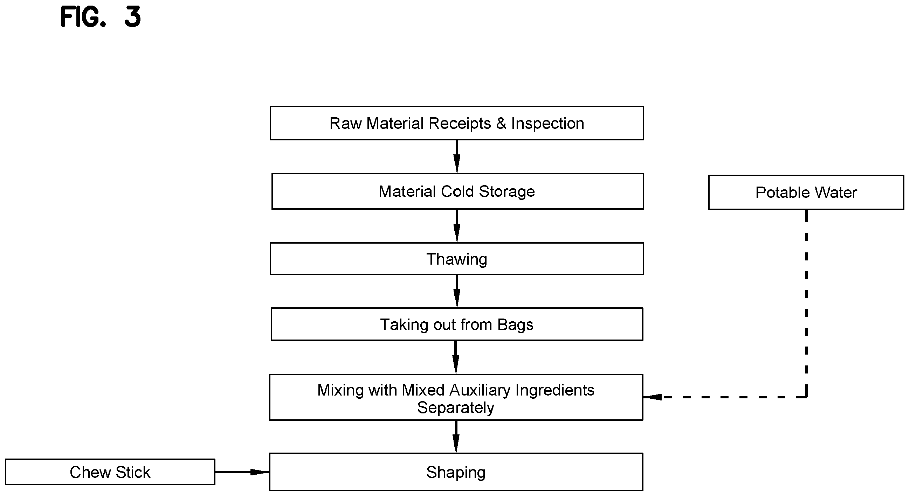

FIG. 3 describes one example method of receiving, storing and processing plant base to form a plant mixture. To that end, plant base can be stored at sub-zero temperatures, although fresh plant base is also within the scope of the invention. The frozen plant base is ready for further processing by thawing the plant base. In some example embodiments, plant base is thawed using a microwave. Alternatively, the plant base can be thawed by other devices known by one of ordinary skill in the art. One such alternative device is a tempering device.

The frozen containers (i.e. bags) of plant base are thawed and the plant base is placed in a tumbler to begin the process of forming a plant mixture. Once the plant base begins the tumbling process, the plant base is combined with auxiliary ingredients forming a plant mixture. The plant base can be used in an amount between about 30% and about 90% by weight of the plant mixture, for example about 60% by weight of the plant mixture. In some example embodiments, the plant base and auxiliary ingredients can optionally be subjected to a vacuum to form a homogeneous plant mixture. The vacuum can remove entrapped air and can provide a more dense and homogenous blend. The vacuum can be applied at a level from about 0 to about 30 mm/Hg.

The plant mixture is prepared by mixing the plant base with auxiliary ingredients that may include a binding agent, a salt, a sugar, an acid, a mold inhibitor, a flavoring, an aroma compound, a coloring compound, or any combination of two or more thereof.

The binding agent can be used in an amount between about 10% and about 75% by weight of the plant mixture. In one example embodiment the binding agent is about 20% by weight of the plant mixture. The type and amount of binding agent can be selected so that the resulting product is not sticky and no residue is left on the pet owners' finger-tips or household's surfaces, such as carpets. For example, the binding agent can be added to "buffer" or to absorb fat content in the plant mixture. The binding agent can also facilitate the blending of the various ingredients and allow the plant mixture to hold a shape prior to being dried.

The binding agent can include, but is not limited to; oat flour, soy flour, wheat flour, rice flour, potato flour, corn flour, rye flour, buckwheat flour, chestnut flour, chickpea flour, atta flour, pea flour, bean flour, amaranth flour, arrowroot flour, taro flour, cattail flour, acorn flour, sorghum flour, or tapioca flour, or a combination of two or more thereof. The flour, in this case wheat flour, is incorporated in amount of no more than 25% by weight of the plant mixture.

The aroma compound or flavoring compound, provide palatability enhancement respectively and include, but are not limited to, garlic (e.g., garlic concentrate, garlic oil, garlic powder, garlic aroma), onion (e.g., onion concentrate, onion oil, onion powder, onion aroma), natural smoke flavor, hickory, mesquite, anchovy, chicken, lobster, tikka, tandoori, parsley, spinach, saffron, digestive (liquid stomach contents of an animal, e.g., chicken), phosphate, yeast, or enzymatic liver (pork, turkey or chicken), or any derivative thereof, or any combination of two or more thereof. Additionally salt may be added to enhance flavor and can also provide particle binding in forming plant mixture.

The aroma compound or flavoring compound can be used in an amount between about 0% and about 5% by weight of the plant mixture, for example less than about 1% by weight of the plant mixture. The coloring compound can be used in an amount between about 0% and about 4% by weight of the plant mixture, for example less than about 1% by weight of the plant mixture. Flavoring compounds can be used in an amount between about 0% and about 0.5% by weight of the plant mixture, for example about .25% by weight of the plant mixture.

Coloring compounds provide cosmetic enhancement respectively and include, but are not limited to, caramel coloring, malliouse, allura red AC, annatto, astaxanthin, betanin or beetroot red, blue 2, brilliant black BN, brilliant blue FCF, brown FK, canthaxanthin, carmine, carotene, Color Blue, curcumin, erythrosine, orange number 1, iron oxide, orange B, ponceau 6R, red 40, red 2G, saffron, sunset yellow FCF, tartrazine, titanium dioxide, turmeric, yellow 5, yellow 2, or any combination of two or more thereof.

The humectant can be used to reduce water activity. Water activity is a measure of the availability of water in a food for microbial growth such as molds. Water activity is a primary method of controlling antimicrobial or mold growth. One example range of water activity is an aW value of less than 0.7. The humectant including sugar, or sugar alcohols can be used in an amount between about 0% and about 20% by weight of the plant mixture, for example about 15% to 18% by weight of the plant mixture. The humectant, can include, but is not limited to fructose, dextrose, maltodextrin, honey, high-fructose corn syrup, maltose, brown sugar, coconut sugar, date sugar, sucanat, molasses, turbinado sugar, dextrin, glucose, sucrose, sucralose, glycerin or any derivative thereof, or any combination of two or more thereof.

The plant mixture may also include a mold inhibitor. A non-exclusive list of mold inhibitors include, but is not limited to, potassium sorbate, cultured whey, calcium propionate, cultured dextrose, cultured yeast, benzoic acid, acetic acid, or plum powder, or any derivative thereof or any combination of two or more thereof.

A moisturizing compound can be used in a range of between 2% and 20%. For example, a moisturizing compound, such as water will aid in formation of the plant mixture. For example, the moisture content of the plant mixture may be above 20% prior to drying the pet treat, but will achieve a moisture content below 20%, for example 18%, in the final pet treat product.

It should be appreciated that each of these ingredients other than the plant base is optional, such as the ingredients with a percentage range starting at 0%. After mixing the plant base with the auxiliary ingredients and optionally subjecting it to a vacuum in the tumbling device, the temperature of the mixture can be checked. If the temperature is too high the mixture can be cooled, by techniques such as the addition of CO₂. Conversely, if the temperature is too low additional heat is applied to facilitate the formation of the plant mixture.

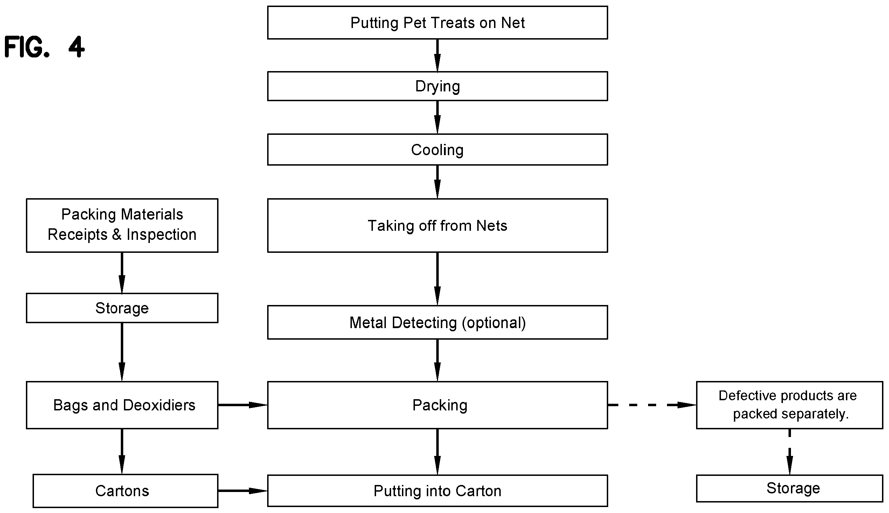

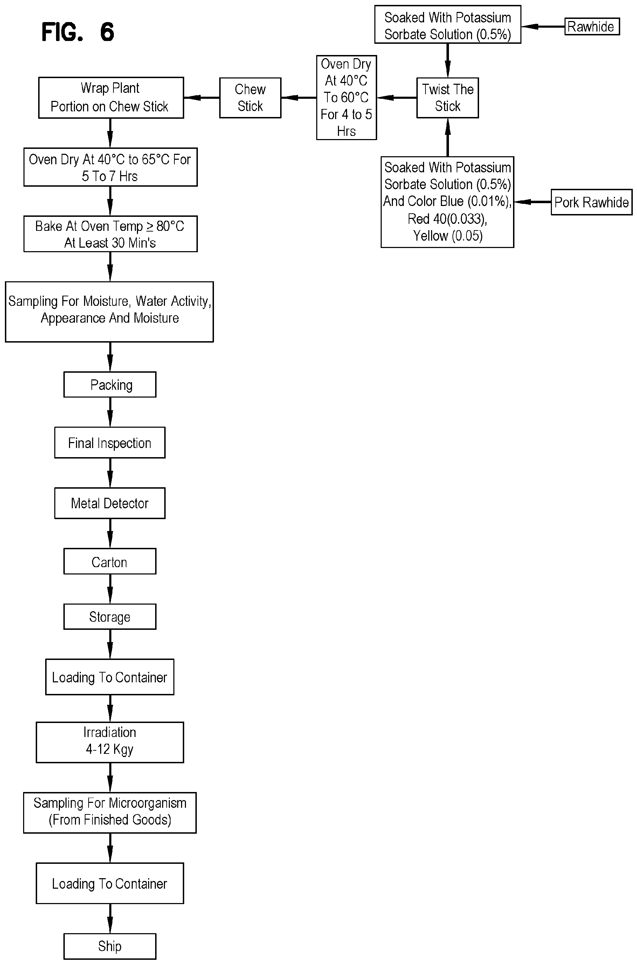

Referring now to FIGs. 4 and 6, where the plant mixture is transported to a production area and portioned. Each portion of plant mixture is positioned on the chew stick 30. FIG. 7 shows a perspective view of one or more portions 20 positioned on a chew stick 30. Although not wanting to be bound by any particular theory, the portions of plant mixture can be wrapped around chew stick in a manner that will require that a portion is pinched to remove any gaps. In an alternative embodiment the chew stick is pressed through the middle of portion, similar to placing meat or vegetables on a skewer when making shish kabobs.

In one embodiment, the portion of plant mixture may vary although portions between .25 inches and 1.5 inches are typical. The portions will typically range in weight, but will be between .25 and 4 oz. Furthermore, although the portions are generally made cylindrical in shape, the portions can be made with other shapes and conformations. For example, the geometrical shape of the base of the cylinder can be selected as desired, such as made round or flat. In addition, the portions can be shaped so as to form, generally round-shaped pieces, cubic-shaped pieces, cylindrical-shaped pieces, polygonal-shaped pieces, pyramid-shaped pieces, heart-shaped pieces, flat-wafer-shaped, or other more complex-shaped pieces.

Referring now to FIG. 4, once the desired number of portions is positioned on the chew stick, the pet treat may be moved to a surface that will form grooves on the outer surface of the portion. In this regard, the surface can be made of a number of materials. However, the materials must be compatible with the drying temperatures and duration. In one example embodiment, the surface is a net. A net allows for the weight of each pet treat to "nestle" on the netting and thus form grooves along the outer surface of the one or more portions.

The plant pieces can then be transferred via conveyor or manual transportation to a drying oven. The drying step is in an oven at about 40 degrees Celsius to about 60 degrees Celsius. In some example embodiments the drying time is at least 5 hours. In related embodiments, the drying time is between 5 to 7 hours. Additionally the pet treat may further be baked. The optional baking step is at a temperature of at least 80 degrees Celsius for at least 30 minutes.

Once the baking step is finished the pet treats are removed from the oven and allowed to cool. Cold air or any other cold gas is forced on the surface which transports the pet treats from the oven to packaging. Air or gas that is warmed by contact with the pet treats is re-circulated and passed through refrigerated plates to cool the air/gas and then the air/gas is blown again over the pet treat. This process can be repeated numerous times until the pet treats are cooled to a desired temperature.

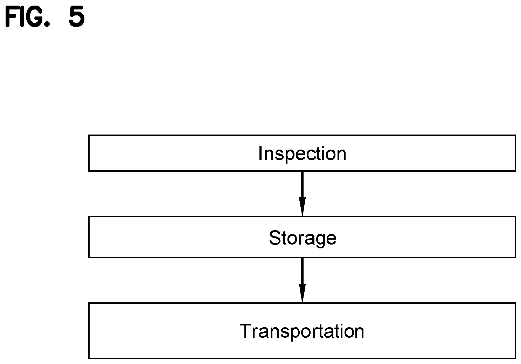

Referring now to FIGs. 5 and 6, where the cooled pet treats are removed from the surface and will have grooves along the outer surface of the one or more portions. This will give the pet treat the appearance of a grilled shish kabob. Prior to packaging, the pet treat may undergo a variety of quality control measures to detect for metal and microbial activity in the finished product. For example, prior to packaging, the pet treats can be sent through a metal detection device. If the presence of metal is detected in the pet treats, the contaminated pet treat is removed from the packaging step.

Upon removal from the netting, and optional quality control checks, the pet treats are transferred into packages. In one embodiment, air in the bags is displaced (either drawn via a vacuum or pushed with an inert gas or gas blend) so as to reduce the level of oxygen in the bags. Then the bags are filled with the pet treats and the bags are purged in an atmosphere filled with nitrogen or an inert gas such as argon, or a combination of these gases. In another embodiment, the bags are filled with the portions of pet treats in a modified atmosphere containing nitrogen, inert gas (e.g., argon), carbon dioxide, or carbon monoxide, or any combination of two or more these gases. Any of these gasses can comprise about 0% to about 100% by weight of the gas composition. In one embodiment, the bags of pet treats comprise an atmosphere that includes nitrogen gas, carbon dioxide, and carbon monoxide. The purpose of the gas introduction is to reduce the amount of oxygen in the bag.

In at least one example embodiment, the resulting pet treat is made such that it does not leave sticky or oily residue on the fingers of the pet owner or consumer who handles the pet treat. In general, typical meat or meat-based products include cooked meat with meat juice or fat may not be desirable by the pet owner or consumer. Alternatively, the pet treats described herein offer a more suitable handling. To state another way, the pet treat leaves a minimum amount of residue on the fingers of the consumer. Moreover, the one or more portions allows for a pet treat that has increased palatability and good ingredients.

In addition, special blending techniques (e.g., vacuum blending as described in the above paragraphs) and other processes or techniques, maximize blending and reduce the occurrence of large chunks of plant in the plant mixture. The use of a dry oven with reduced humidity, as described in the above paragraphs, can produce pet treats with a substantially dry outer surface. This outer surface can form an outer dry surface to minimize the moisture from the one or more portions from bleeding out. Further, because the one or more portions are dried and the flavoring is found homogenously mixed the likelihood of transferring any dye or flavoring to a decorative surface is reduced because the dye or flavoring is less prone to contacting the decorative surface and is less prone to rub off if it does contact the decorative surface.

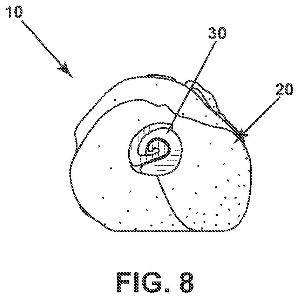

As shown in FIGs. 7-9, the final product is a pet treat 10 with one or more portions 20 positioned along a chew stick 30 with the appearance of a shish kabob. Referring to the ingredients and material described above, the pet treat 10 can comprise at least one rawhide section shaped to form a chew stick 30.

In some example embodiments, at least one rawhide section is soaked in a potassium sorbate solution prior to forming said chew stick. The process described above describes that the chew stick is placed in a potassium sorbate solution. Although one skilled in the art will readily be able to ascertain the precise concentration needed to provide sufficient anti-mold activity. For example, one concentration includes a concentration of potassium sorbate at 0.5% v/v. The chew stick can be formed in a variety of ways. In order to achieve a dual component appearance, one rawhide piece may be twisted where a portion of chew stick is colored to provide the appearance of a multi-layered chew stick. Referring again to FIG. 2, two rawhide pieces can be used. In some related embodiments, the at least two rawhide pieces are from different animal sources.

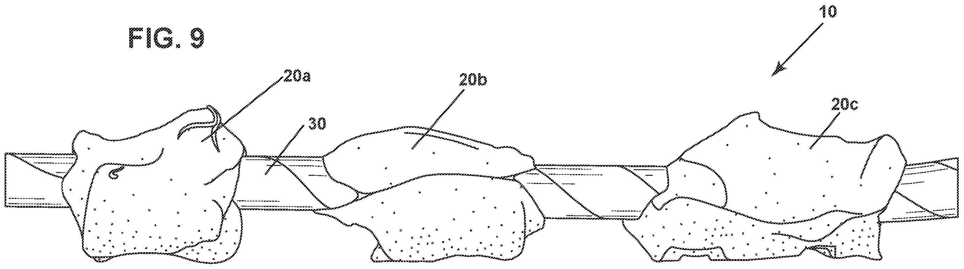

The one or more portions 20 are attached to the outside surface of the chew stick 30. If should be appreciated that the number of portions 20 placed along a chew stick will be related to consumer desire and commercial viability. However, the length of the chew stick, size of the one or more portions and proximity of the one or more portions to one another are all factors in determining the number of portions on the pet treat 10. As best shown in FIG. 9, each of the one or more portions are positioned in a manner that provide a space between the next adjacent portion where the outer surface of chew stick 30 is exposed. In some example embodiments, each of the one or more portions are positioned in a substantially equal distance from an adjacent portion. As described above, the one or more portions also comprise grooves on the outer surface.

Referring now to FIGs. 7 and 9 where pet treat is described showing three portions. As shown, each of the three portions 20a, 20b and 20c can be made from the same plant mixture formulation. Alternatively, pet treat can be made where at least two of the one or more portions on the pet treat 10 are from the same plant mixture formulation. In another alternative embodiment each of the one or more portions on the pet treat 10 are a different plant mixture formulation In at least these example embodiments the three portions are selected from a group consisting of cantaloupe, green beans, spinach, applies, pumpkin, sweet potatoes, blueberries, watermelon, asparagus, Brussel sprouts and combinations thereof. However, the specific plant mixture used for each portion is selected from a group consisting of apple, apricot, banana, bilberry, blackberry, blackcurrant, blueberry, coconut, currant, cherry, cherimoya, clementine, date, damson, durian, elderberry, fig, feijoa, gooseberry, grape, grapefruit, huckleberry, jackfruit, jambul, jujube, kiwifruit, kumquat, lemon, lime, loquat, lychee, mango, mangostine, melon, cantaloupe, honeydew, watermelon, rock melon, nectarine, orange, passionfruit, peach, pear, plum, prune, pineapple, pomegranate, pomelo, raisin, raspberry, rambutan, redcurrant, satsuma, strawberry, tangerine, ugli fruit, artichoke, arugula, asparagus, avocado, bamboo shoots, bean sprouts, beans, beet, Belgian endive, bell pepper, broccoli, brussels sprouts, burdock root, cabbage, calabash, capers, carrot, cassava, cauliflower, celery, celery root, corn, maize, candle corn, cucumber, radish, edamame, eggplant, garlic, fennel, fiddlehead, galangal, ginger, grape leaves, beet greens, collard greens, dandelion greens, kale, mustard greens, rapini, spinach, Swiss chard, turnip greens, hearts of palm, horseradish, Jerusalem artichoke, jícama, leeks, lemongrass, lettuce, mushrooms, okra, olive, onion, scallions, parsley, parsley root, parsnip, peas, peppers, plantain, potato, pumpkin, purslane, radicchio, radish, rutabaga, shallots, spinach, squash, sweet potato, tomato, turnip, water chestnut, water spinach, watercress, winter melon, yams, zucchini and combinations thereof.

While various embodiments of the present invention have been described above, it should be understood that they have been presented by way of example, and not limitation. It will be apparent to persons skilled in the relevant art(s) that various changes in form and detail can be made therein without departing from the scope of the present invention. In fact, after reading the above description, it will be apparent to one skilled in the relevant art(s) how to implement the invention in alternative embodiments. Thus, the present invention should not be limited by any of the above-described exemplary embodiments.

## Claims

1. A process for making a pet treat comprising:
forming a plant mixture into portions, wherein the total plant material content is 6% to 90% by weight of the entire plant mixture;
providing a chew stick comprising rawhide;
positioning one or more portions on the chew stick, thereby forming a pet treat; and
drying the pet treat, wherein the chew stick is dried for at least 4 hours prior to having the one or more portions attached thereto;
wherein the positioning step comprises wrapping the one or more portions around the chew stick.

2. The process of claim 1, wherein the plant mixture comprises mixing a plant base with one or more auxiliary ingredients, wherein optionally the one or more auxiliary ingredients include a binding agent, a salt, a sugar, an acid, a mold inhibitor, a flavoring, an aroma compound, a coloring compound, phytochemical or any combination of two or more thereof.

3. The process of any of claims 1-2, wherein the drying is in an oven at 40 degrees Celsius to 60 degrees Celsius; and/or wherein the drying time is at least 5 hours; or wherein the drying time is between 5 to 7 hours.

4. The process of any of claims 1-3, further comprising baking the pet treat, wherein optionally the baking is at a temperature of at least 80 degrees Celsius; and/or wherein the baking is for at least 30 minutes.

5. The process of any of claims 1 to 4, further comprising the step of packing a plurality of pet treats in a container.

6. The process of any of claims 1 to 5, wherein the chew stick is formed by soaking rawhide in a potassium sorbate solution prior to twisting the rawhide, thereby forming the chew stick and drying the chew stick at 40 degrees Celsius to 65 degrees Celsius, wherein optionally the concentration of potassium sorbate is 0.5% v/v.

7. The process of any of claims 1 to 6, wherein the total plant material content is 6% to 35% by weight of the entire plant mixture; and/or wherein the one or more portions, comprises at least three portions and wherein each of the at least three portions are positioned equal distance from the adjacent portion(s); and/or wherein the plant base comprises a plant selected from a group consisting of apple, apricot, banana, blackberry, blackcurrant, blueberry, coconut, cherry, cherimoya, date, durian, fig, feijoa, gooseberry, grape, grapefruit, jackfruit, jambul, kiwifruit, kumquat, lemon, lime, loquat, lychee, mango, mangosteen, melon, cantaloupe, honeydew, watermelon, nectarine, orange, passionfruit, peach, pear, plum, prune, pineapple, pomegranate, pommelo, raspberry, rambutan, redcurrant, satsuma, strawberry, tangerine, ugli fruit and combinations thereof; and/or wherein the plant base comprises a plant selected from a group consisting of artichoke, asparagus, avocado, bamboo shoots, bean sprouts, beans, beet, endive, bell pepper, broccoli, brussels sprouts, cabbage, calabaza, carrot, cauliflower, celery, cucumber, radish, eggplant, garlic, fiddlehead, galangal, ginger, beet greens, collard greens, dandelion greens, kale, mustard, spinach, Swiss chard, turnip greens, Jerusalem artichoke, jícama, lettuce, mushrooms, okra, onion, parsley, parsnip, peas, peppers, plantain, pumpkin, radicchio, radish, rutabaga, spinach, squash, sweet potato, tomato, turnip, water chestnut, yams, and combinations thereof.

8. The process of any of claims 1 to 7, further comprising placing the pet treat on a surface prior to drying, wherein the surface forms grooves on the outer layer of the one or more portions.

9. A pet treat comprising:
at least one rawhide section shaped to form a chew stick and
one or more portions, wherein the one or more portions are disposed on the outside surface of the chew stick,
wherein the one or more portions comprises a plant mixture which comprises a plant base with one or more auxiliary ingredients,
wherein the one or more portions are wrapped around the chew stick, and
wherein the total plant material content is 6% to 90% by weight of the entire plant mixture.

10. The pet treat of claim 9, wherein the one or more auxiliary ingredients include a binding agent, a moisturizing compound, a salt, a sugar, an acid, a mold inhibitor, a flavoring compound, an aroma compound, a coloring compound and any combination of two or more thereof; and/or wherein each of the one or more portions on the pet treat is made from the same plant mixture formulation; or wherein at least two of the one or more portions on the pet treat are from the same plant mixture formulation; or wherein each of the one or more portions on the pet treat are a different plant mixture formulation.

11. The pet treat of any of claims 9-10, wherein the plant base comprises a plant selected from a group consisting of apple, apricot, banana, blackberry, blackcurrant, blueberry, coconut, cherry, cherimoya, date, durian, fig, feijoa, gooseberry, grape, grapefruit, jackfruit, jambul, kiwifruit, kumquat, lemon, lime, loquat, lychee, mango, mangosteen, melon, cantaloupe, honeydew, watermelon, nectarine, orange, passionfruit, peach, pear, plum, prune, pineapple, pomegranate, pommelo, raspberry, rambutan, redcurrant, satsuma, strawberry, tangerine, ugli fruit, artichoke, asparagus, avocado, bamboo shoots, bean sprouts, beans, beet, endive, bell pepper, broccoli, brussels sprouts, cabbage, calabaza, carrot, cauliflower, celery, , cucumber, radish, eggplant, garlic, fiddlehead, galangal, ginger, beet greens, collard greens, dandelion greens, kale, mustard, spinach, Swiss chard, turnip greens, Jerusalem artichoke, jícama, lettuce, mushrooms, okra, , onion, parsley, parsnip, peas, peppers, plantain, pumpkin, radicchio, radish, rutabaga, spinach, squash, sweet potato, tomato, turnip, water chestnut, yams, and combinations thereof; and/or wherein the one or more portions comprise grooves on the outer surface; and/or wherein the at least one rawhide section is soaked in a potassium sorbate solution prior to forming said chew stick, wherein optionally the concentration of potassium sorbate is 0.5% v/v.

12. The pet treat of any of claims 9-11, wherein the one or more portions, comprises at least three portions and wherein each of the at least three portions are positioned equal distance from an adjacent portion(s); and/or wherein the at least one rawhide section comprises two rawhide sheets twisted together; and/or wherein the pet treat comprises one or more coloring compounds selected from a group consisting of caramel coloring, malliouse, allura red AC, annatto, astaxanthin, betanin or beetroot red, blue 2, brilliant black BN, brilliant blue FCF, brown FK, canthaxanthin, carmine, carotene, Color Blue, curcumin, erythrosine, orange number 1, iron oxide, orange B, ponceau 6R, red 40, red 2G, saffron, sunset yellow FCF, tartrazine, titanium dioxide, turmeric, yellow 5, yellow 2, or any combination of two or more thereof.

13. The pet treat of any of claims 9 to 12, wherein the at least one rawhide section comprises two rawhide sheets, wherein optionally each of two rawhide sheets are from a different animal source.

14. The pet treat of any of claims 9 to 13, wherein each of the one or more portions are free from a meat product; and/or wherein the one or more portions comprises at least three portions and wherein each of the portions comprises a plant mixture comprising a plant base with one or more auxiliary ingredients and wherein each of the one or more portions on the pet treat are a different plant mixture formulation and wherein the pet treat comprises portions each having at least one of cantaloupe, green beans, spinach, apples, pumpkin, sweet potatoes, blueberries, watermelon, asparagus and brussel sprouts; and/or wherein the plurality of the portions are positioned on the external surface of the chew stick; and/or wherein the pet treat is in a lollipop form.

## Patentansprüche

1. Verfahren zur Herstellung einer Tierleckerei, umfassend:
Bilden einer Pflanzenmischung in Portionen, wobei der Gesamtgehalt an Pflanzenmaterial 6 Gew.-% bis 90 Gew.-% der gesamten Pflanzenmischung beträgt;
Bereitstellen eines Kaustabs, der Rohhaut umfasst;
Positionieren einer oder mehrerer Portionen auf dem Kaustab, wodurch eine Tierleckerei gebildet wird; und
Trocknen der Tierleckerei, wobei der Kaustab mindestens 4 Stunden lang getrocknet wird, bevor der eine oder die mehreren Portionen daran befestigt werden;
wobei der Schritt des Positionierens das Wickeln des einen oder der mehreren Portionen um den Kaustab umfasst.

2. Verfahren nach Anspruch 1, wobei die Pflanzenmischung das Mischen einer Pflanzenbasis mit einem oder mehreren zusätzlichen Inhaltsstoffen umfasst, wobei der eine oder die mehreren zusätzlichen Inhaltsstoffe optional ein Bindemittel, ein Salz, einen Zucker, eine Säure, einen Schimmelinhibitor, einen Geschmacksstoff, eine Aromaverbindung, eine färbende Verbindung, eine Phytochemikalie oder eine beliebige Kombination von zwei oder mehreren davon einschließen.

3. Verfahren nach einem der Ansprüche 1 bis 2, wobei das Trocknen in einem Ofen bei 40 Grad Celsius bis 60 Grad Celsius erfolgt; und/oder wobei die Trocknungszeit mindestens 5 Stunden beträgt; oder wobei die Trocknungszeit zwischen 5 und 7 Stunden beträgt.

4. Verfahren nach einem der Ansprüche 1 bis 3, ferner umfassend das Backen der Tierleckerei, wobei das Backen optional bei einer Temperatur von mindestens 80 Grad Celsius erfolgt; und/oder wobei das Backen mindestens 30 Minuten lang erfolgt.

5. Verfahren nach einem der Ansprüche 1 bis 4, ferner umfassend den Schritt des Verpackens einer Vielzahl von Tierleckereien in einen Behälter.

6. Verfahren nach einem der Ansprüche 1 bis 5, wobei der Kaustab durch Einweichen von Rohhaut in einer Kaliumsorbatlösung vor Verdrehen der Rohhaut zum Bilden des Kaustabs und Trocknen des Kaustabs bei 40 Grad Celsius bis 65 Grad Celsius gebildet wird, wobei die Kaliumsorbatkonzentration optional 0,5 % v/v beträgt.

7. Verfahren nach einem der Ansprüche 1 bis 6, wobei der Gesamtgehalt an Pflanzenmaterial 6 Gew.-% bis 35 Gew.-% der gesamten Pflanzenmischung beträgt; und/oder wobei die eine oder die mehreren Portionen mindestens drei Portionen umfassen und wobei jede der mindestens drei Portionen in gleichem Abstand zu der/den benachbarten Portion(en) positioniert ist; und/oder wobei die Pflanzenbasis eine Pflanze umfasst, die ausgewählt ist aus einer Gruppe, bestehend aus Apfel, Aprikose, Banane, Brombeere, schwarzer Johannisbeere, Blaubeere, Kokosnuss, Kirsche, Chrerimoya, Dattel, Durian, Feige, Feijoa, Stachelbeere, Weintraube, Grapefruit, Jackfrucht, Jambul, Kiwifrucht, Kumquat, Zitrone, Limette, Mispel, Litschi, Mango, Mangostane, Melone, Kantaloupe, Honigtau, Wassermelone, Nektarine, Orange, Passionsfrucht, Pfirsich, Birne, Zwetschge, Pflaume, Ananas, Granatapfel, Pommelo, Himbeere, Rambutan, roter Johannisbeere, Satsuma, Erdbeere, Mandarine, Uglifrucht und Kombinationen davon; und/oder wobei die Pflanzenbasis eine Pflanze umfasst, die ausgewählt ist aus einer Gruppe, bestehend aus Artischocke, Spargel, Avocado, Bambussprossen, Bohnensprossen, Bohnen, Rübe, Endivie, Peperoni, Brokkoli, Rosenkohl, Kohl, Calabaza, Karotte, Blumenkohl, Sellerie, Gurke, Rettich, Aubergine, Knoblauch, Fiddlehead, Galgant, Ingwer, Rübenblättern, Blattkohl, Löwenzahn, Grünkohl, Senf, Spinat, Mangold, Stielmus, Topinambur, Jicama, Kopfsalat, Champignons, Okra, Zwiebel, Petersilie, Pastinake, Erbsen, Paprika, Wegerich, Kürbis, Radicchio, Rettich, Kohlrübe, Spinat, Gartenkürbis, Süßkartoffel, Tomate, Kohlrabi, Wasserkastanie, Yamswurzeln und Kombinationen davon.

8. Verfahren nach einem der Ansprüche 1 bis 7, ferner umfassend das Platzieren der Tierleckerei auf einer Oberfläche vor dem Trocknen, wobei die Oberfläche Rillen auf der Außenschicht des einen oder der mehreren Portionen bildet.

9. Tierleckerei, umfassend:
mindestens einen Rohhautabschnitt, der so geformt ist, dass er einen Kaustab bildet, und
eine oder mehrere Portionen, wobei die eine oder die mehreren Portionen auf der Außenoberfläche des Kaustabs angeordnet sind,
wobei die eine oder die mehreren Portionen eine Pflanzenmischung umfassen, die eine Pflanzenbasis mit einem oder mehreren zusätzlichen Inhaltsstoffen umfasst,
wobei der eine oder die mehreren Portionen um den Kaustab gewickelt sind und
wobei der Gesamtgehalt an Pflanzenmaterial 6 Gew.-% bis 90 Gew.-% der gesamten Pflanzenmischung beträgt.

10. Tierleckerei nach Anspruch 9, wobei der eine oder die mehreren zusätzlichen Inhaltsstoffe ein Bindemittel, eine feuchtigkeitsspendende Verbindung, ein Salz, einen Zucker, eine Säure, einen Schimmelinhibitor, eine Geschmacksverbindung, eine Aromaverbindung, eine färbende Verbindung und eine beliebige Kombination von zwei oder mehreren davon einschließen; und/oder wobei jede der einen oder der mehreren Portionen an der Tierleckerei aus der gleichen Pflanzenmischungsformulierung hergestellt ist; oder wobei mindestens zwei der einen oder der mehreren Portionen an der Tierleckerei aus der gleichen Pflanzenmischungsformulierung stammen; oder wobei jede der einen oder der mehreren Portionen an der Tierleckerei eine andere Pflanzenmischungsformulierung ist.

11. Tierleckerei nach einem der Ansprüche 9 bis 10, wobei die Pflanzenbasis eine Pflanze umfasst, die ausgewählt ist aus einer Gruppe bestehend aus Apfel, Aprikose, Banane, Brombeere, schwarzer Johannisbeere, Blaubeere, Kokosnuss, Kirsche, Choremoya, Dattel, Durian, Feige, Feijoa, Stachelbeere, Weintraube, Grapefruit, Jackfrucht, Jambul, Kiwifrucht, Kumquat, Zitrone, Limone, Mispel, Litschi, Mango, Mangostane, Melone, Kantaloupe, Honigtau, Wassermelone, Nektarine, Orange, Passionsfrucht, Pfirsich, Birne, Pflaume, Zwetschge, Ananas, Granatapfel, Pommelo, Himbeere, Rambutan, roter Johannisbeere, Satsuma, Erdbeere, Mandarine, Uglifrucht, Artischocke, Spargel, Avocado, Bambussprossen, Bohnensprossen, Bohnen, Rübe, Endivie, Peperoni, Brokkoli, Rosenkohl, Kohl, Calabaza, Karotte, Blumenkohl, Sellerie, Gurke, Rettich, Aubergine, Knoblauch, Fiddlehead, Galgant, Ingwer, Rübenblättern, Blattkohl, Löwenzahn, Grünkohl, Senf, Spinat, Mangold, Stielmus, Topinambur, Jicama, Kopfsalat, Champignons, Okra, Zwiebel, Petersilie, Pastinake, Erbsen, Paprika, Wegerich, Kürbis, Radicchio, Rettich, Kohlrübe, Spinat, Gartenkürbis, Süßkartoffel, Tomate, Kohlrabi, Wasserkastanie, Yamswurzeln und Kombinationen davon; und/oder wobei der eine oder die mehreren Portionen Rillen auf der Außenoberfläche umfassen; und/oder wobei der mindestens eine Rohhautabschnitt vor dem Bilden des Kaustabs in einer Kaliumsorbatlösung getränkt wird, wobei die Kaliumsorbatkonzentration optional 0,5 % v/v beträgt.

12. Tierleckerei nach einem der Ansprüche 9 bis 11, wobei die eine oder die mehreren Portionen mindestens drei Portionen umfassen und wobei jede der mindestens drei Portionen in gleichem Abstand zu einer oder mehreren benachbarten Portion(en) positioniert ist; und/oder wobei der mindestens eine Rohhautabschnitt zwei miteinander verdrillte Rohhautschichten umfasst; und/oder wobei die Tierleckerei eine oder mehrere färbende Verbindungen umfasst, ausgewählt aus einer Gruppe bestehend aus Karamellfärbung, Malliose, Allurarot AC, Annatto, Astaxanthin, Betanin oder Rübenrot, Blau 2, Brillantschwarz BN, Brillantblau FCF, Braun FK, Canthaxanthin, Carmin, Carotin, Color Blue, Curcumin, Erythrosin, Orange Nummer 1, Eisenoxid, Orange B, Ponceau 6R, Rot 40, Rot 2G, Safran, Sunset Yellow FCF, Tartrazin, Titandioxid, Kurkuma, Gelb 5, Gelb 2 oder einer beliebigen Kombination von zwei oder mehreren davon.

13. Tierleckerei nach einem der Ansprüche 9 bis 12, wobei der mindestens eine Rohhautabschnitt zwei Rohhautschichten umfasst, wobei optional jede von zwei Rohhautschichten aus einer anderen Tierquelle stammt.

14. Tierleckerei nach einem der Ansprüche 9 bis 13, wobei jede der einen oder der mehreren Portionen frei von einem Fleischprodukt ist; und/oder wobei die eine oder die mehreren Portionen mindestens drei Portionen umfassen und wobei jede der Portionen eine Pflanzenmischung umfasst, die eine Pflanzenbasis mit einem oder mehreren zusätzlichen Inhaltsstoffen umfasst, und wobei jede der einen oder der mehreren Portionen an der Tierleckerei eine andere Pflanzenmischungsformulierung ist und wobei die Tierleckerei Portionen mit jeweils mindestens einem von Kantaloupe, grünen Bohnen, Spinat, Äpfeln, Kürbis, Süßkartoffeln, Blaubeeren, Wassermelone, Spargel und Rosenkohl umfasst; und/oder wobei die Vielzahl der Portionen auf der Außenoberfläche des Kaustabs positioniert sind; und/oder wobei die Tierleckerei in einer Lutscherform vorliegt.

## Revendications

1. Procédé de fabrication d'une friandise pour animal domestique comprenant :
la formation d'un mélange végétal en portions, dans lequel la teneur totale en matière végétale est comprise entre 6 % et 90 % en poids de l'ensemble du mélange végétal ;
la préparation d'un bâton à mâcher composé de babiche ;
le positionnement d'une ou plusieurs portions sur le bâton à mâcher, pour former ainsi une friandise pour animal domestique ; et
le séchage de la friandise pour animal domestique, dans lequel le bâton à mâcher est séché pendant au moins 4 heures avant que les une ou plusieurs portions y soient fixées ;
dans lequel l'étape de positionnement comprend l'enroulement des une ou plusieurs portions autour du bâton à mâcher.

2. Procédé selon la revendication 1, dans lequel le mélange végétal comprend le mélange d'une base végétale avec un ou plusieurs ingrédients auxiliaires, dans lequel éventuellement les un ou plusieurs ingrédients auxiliaires incluent un agent liant, un sel, un sucre, un acide, un inhibiteur de moisissures, un arôme, un composé aromatique, un composé colorant, un produit phytochimique ou toute combinaison de deux ou plusieurs de ceux-ci.

3. Procédé selon l'une quelconque des revendications 1 et 2, dans lequel le séchage se fait dans un four entre 40 degrés Celsius et 60 degrés Celsius ; et/ou dans lequel le temps de séchage est d'au moins 5 heures ; ou dans lequel le temps de séchage est compris entre 5 et 7 heures.

4. Procédé selon l'une quelconque des revendications 1 à 3, comprenant en outre la cuisson de la friandise pour animal domestique, dans lequel éventuellement la cuisson se fait à une température d'au moins 80 degrés Celsius ; et/ou dans lequel la cuisson dure au moins 30 minutes.

5. Procédé selon l'une quelconque des revendications 1 à 4, comprenant en outre l'étape de conditionnement d'une pluralité de friandises pour animal domestique dans un récipient.

6. Procédé selon l'une quelconque des revendications 1 à 5, dans lequel le bâton à mâcher est formé en trempant de la babiche dans une solution de sorbate de potassium avant de tordre la babiche, formant ainsi le bâton à mâcher et en séchant le bâton à mâcher entre 40 degrés Celsius et 65 degrés Celsius, dans lequel, éventuellement, la concentration de sorbate de potassium est de 0,5 % v/v.

7. Procédé selon l'une quelconque des revendications 1 à 6, dans lequel la teneur totale en matières végétales est de 6 % à 35 % en poids de l'ensemble du mélange végétal ; et/ou dans lequel les une ou plusieurs portions comprennent au moins trois portions et dans lequel chacune des au moins trois portions sont placées à égale distance de la ou des portions adjacentes ; et/ou dans lequel la base végétale comprend une plante choisie dans un groupe constitué de pomme, abricot, banane, mûre, cassis, myrtille, noix de coco, cerise, chérimolier, datte, durian, figue, feijoa, groseille à maquereau, raisin, pamplemousse, jacquier, giroflier, kiwi, kumquat, citron, citron vert, loquat, litchi, mangue, mangoustan, melon, cantaloup, melon miel, pastèque, nectarine, orange, fruit de la passion, pêche, poire, prune, pruneau, ananas, grenade, pomélo, framboise, ramboutan, groseille, satsuma, fraise, mandarine, fruit de l'ugli et leurs combinaisons ; et/ou dans lequel la base végétale comprend une plante choisie dans un groupe constitué d'artichaut, asperge, avocat, pousses de bambou, germes de haricot, haricots, betterave, endive, poivron, brocoli, choux de Bruxelles, chou, calebasse, carotte, chou-fleur, céleri, concombre, radis, aubergine, ail, crosse de fougère, galanga, gingembre, feuilles de betterave, feuilles de chou vert, feuilles de pissenlit, chou frisé, moutarde, épinards, bettes à carde, feuilles de navet, topinambour, jicama, laitue, champignons, gombo, oignon, persil, panais, pois, poivrons, plantain, potiron, radicchio, radis, rutabaga, épinards, courge, patate douce, tomate, navet, châtaigne d'eau, ignames et leurs combinaisons.

8. Procédé selon l'une quelconque des revendications 1 à 7, comprenant en outre le placement de la friandise pour animal domestique sur une surface avant le séchage, dans lequel la surface forme des rainures sur la couche extérieure des une ou plusieurs portions.

9. Friandise pour animal domestique comprenant :
au moins une section de babiche formée pour constituer un bâton à mâcher et
une ou plusieurs portions, dans laquelle les une ou plusieurs portions sont disposées sur la surface extérieure du bâton à mâcher,
dans laquelle les une ou plusieurs portions comprennent un mélange végétal qui comprend une base végétale avec un ou plusieurs ingrédients auxiliaires,
dans laquelle les une ou plusieurs portions sont enroulées autour du bâton à mâcher, et
dans laquelle la teneur totale en matières végétales est de 6 % à 90 % en poids de l'ensemble du mélange végétal.

10. Friandise pour animal domestique selon la revendication 9, dans laquelle les un ou plusieurs ingrédients auxiliaires incluent un agent liant, un composé hydratant, un sel, un sucre, un acide, un inhibiteur de moisissures, un composé aromatisant, un composé aromatique, un composé colorant et toute combinaison de deux ou plus de ceux-ci ; et/ou dans laquelle chacune des une ou plusieurs portions sur la friandise pour animal domestique est constituée de la même formulation de mélange végétal ; ou dans laquelle au moins deux des une ou plusieurs portions sur la friandise pour animal domestique proviennent de la même formulation de mélange végétal ; ou dans laquelle chacune des une ou plusieurs portions sur la friandise pour animal domestique est une formulation différente de mélange végétal.

11. Friandise pour animal domestique selon l'une quelconque des revendications 9 et 10, dans laquelle la base végétale comprend une plante choisie dans un groupe constitué de pomme, abricot, banane, mûre, cassis, myrtille, noix de coco, cerise, chérimolier, datte, durian, figue, feijoa, groseille à maquereau, raisin, pamplemousse, jacquier, giroflier, kiwi, kumquat, citron, citron vert, loquat, litchi, mangue, mangoustan, melon, cantaloup, melon miel, pastèque, nectarine, orange, fruit de la passion, pêche, poire, prune, pruneau, ananas, grenade, pomélo, framboise, ramboutan, groseille, satsuma, fraise, mandarine, fruit de l'ugli, artichaut, asperge, avocat, pousses de bambou, germes de haricot, haricot, betterave, endive, poivron, brocolis, choux de Bruxelles, chou, calebasse, carotte, choux-fleur, céleri, concombre, radis, aubergine, ail, crosse de fougère, galanga, gingembre, feuilles de betterave, feuilles de chou vert, feuilles de pissenlit, choux frisé, moutarde, épinards, bettes à carde, feuilles de navet, topinambour, jicama, laitue, champignons, gombo, oignon, persil, panais, pois, poivron, plantain, potiron, radicchio, radis, rutabaga, épinards, courge, patate douce, tomate, navet, châtaigne d'eau, ignames et leurs combinaisons ; et/ou dans laquelle les une ou plusieurs portions comprennent des rainures sur la surface externe ; et/ou dans laquelle l'au moins une section de babiche est trempée dans une solution de sorbate de potassium avant de former ledit bâton à mâcher, dans laquelle éventuellement la concentration de sorbate de potassium est de 0,5 % v/v.

12. Friandise pour animal domestique selon l'une quelconque des revendications 9 à 11, dans laquelle les une ou plusieurs portions comprennent au moins trois portions et dans laquelle chacune des au moins trois portions sont positionnées à égale distance d'une ou de plusieurs portions adjacentes ; et/ou dans laquelle l'au moins une section de babiche comprend deux feuilles de babiche torsadées ensemble ; et/ou dans laquelle la friandise pour animal domestique comprend un ou plusieurs composés colorants choisis dans un groupe constitué de coloration de caramel, malliouse, rouge allura AC, annatto, astaxanthine, bétanine ou rouge betterave, bleu 2, noir brillant BN, bleu brillant FCF, brun FK, canthaxanthine, carmin, carotène, Color Blue, curcumin, érythrosine, orange numéro 1, oxyde de fer, orange B, ponceau 6R, rouge 40, rouge 2G, safran, jaune soleil couchant FCF, tartrazine, dioxyde de titane, curcuma, jaune 5, jaune 2, ou toute combinaison de deux ou plusieurs de ceux-ci.

13. Friandise pour animal domestique selon l'une quelconque des revendications 9 à 12, dans laquelle l'au moins une section de babiche comprend deux feuilles de babiche, dans laquelle éventuellement chacune de deux feuilles de babiche provient d'une source animale différente.

14. Friandise pour animal domestique selon l'une quelconque des revendications 9 à 13, dans laquelle chacune des une ou plusieurs portions sont exemptes d'un produit carné ; et/ou dans laquelle les une ou plusieurs portions comprennent au moins trois portions et dans laquelle chacune des portions comprend un mélange végétal comprenant une base végétale avec un ou plusieurs ingrédients auxiliaires et dans laquelle chacune des une ou plusieurs portions sur la friandise pour animal domestique ont une formulation de mélange végétal différente et dans laquelle la friandise pour animal domestique comprend des portions ayant chacune au moins un de cantaloup, haricots verts, épinard, pommes, potiron, patates douces, myrtilles, pastèque, asperge et choux de Bruxelles ; et/ou dans laquelle la pluralité des portions sont positionnées sur la surface externe du bâton à mâcher ; et/ou dans laquelle la friandise pour animal domestique a la forme d'une sucette.
